(19) Europäisches Patentamt
European Patent Office
Office européen des brevets

(11) EP 4 711 504 A1

(12) EUROPEAN PATENT APPLICATION
published in accordance with Art. 153(4) EPC

(43) Date of publication:
**18.03.2026 Bulletin 2026/12**

(21) Application number: **24807033.6**

(22) Date of filing: **26.04.2024**

(51) International Patent Classification (IPC):
***C25B 11/052** (2021.01)* ***C25B 1/04** (2021.01)*
***C25B 9/00** (2021.01)* ***C25B 9/23** (2021.01)*
***C25B 11/075** (2021.01)*

(52) Cooperative Patent Classification (CPC):
**C25B 1/04; C25B 9/00; C25B 9/23; C25B 11/052; C25B 11/075**

(86) International application number:
**PCT/JP2024/016614**

(87) International publication number:
**WO 2024/237079 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023 JP 2023079390**

(71) Applicant: **Panasonic Holdings Corporation**
**Kadoma-shi, Osaka 571-8501 (JP)**

(72) Inventors:
- **SAWADA, Koichi**
**kadoma-shi, Osaka 571-0057 (JP)**
- **HAYASHI, Takao**
**kadoma-shi, Osaka 571-0057 (JP)**
- **MURASE, Hideaki**
**kadoma-shi, Osaka 571-0057 (JP)**
- **ASAZAWA, Koichiro**
**kadoma-shi, Osaka 571-0057 (JP)**

(74) Representative: **Eisenführ Speiser**
**Patentanwälte Rechtsanwälte PartGmbB**
**Gollierstraße 4**
**80339 München (DE)**

# (54) ELECTRODE CATALYST INK FOR WATER ELECTROLYSIS, ELECTRODE CATALYST, WATER ELECTROLYSIS CELL, AND WATER ELECTROLYSIS DEVICE

(57) An ink 1a for water electrolysis electrode catalyst includes a catalyst 11, a support 15, an organic polymer 12, and a solvent 13 including water. The catalyst 11 includes at least one transition metal. The support 15 supports the catalyst 11 and includes a transition metal. The organic polymer 12 includes a water-insoluble polymer 12b and a nonionic water-soluble polymer 12a.

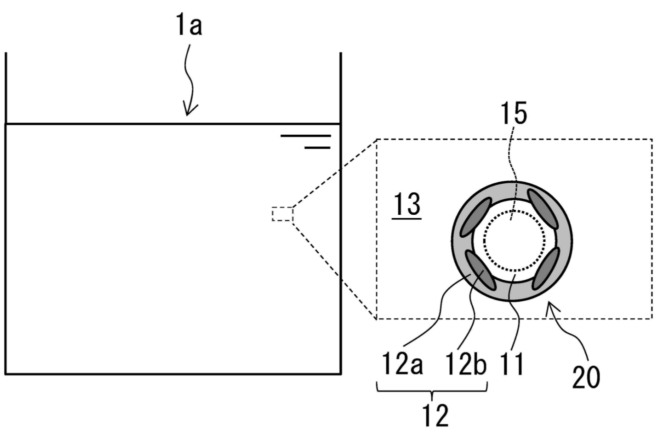


FIG. 1



Processed by Luminess, 75001 PARIS (FR)

## Description

### TECHNICAL FIELD

The present invention relates to an ink for water electrolysis electrode catalyst, an electrode catalyst, a water electrolysis cell, and a water electrolysis apparatus.

### BACKGROUND ART

In recent years, there has been an expectation for development of electrodes to be used in water electrolysis apparatuses.

It has been known that a predetermined ink is used for forming a catalyst layer to be used for water electrolysis. For example, Patent Literature 1 discloses a composition for forming a water electrolysis catalyst layer, the composition including a proton reduction catalyst and fine particles of water dispersible resin. In the composition for forming a water electrolysis catalyst layer, the fine particles of water dispersible resin are dispersed together with the proton reduction catalyst.

### CITATION LIST

#### Patent Literature

Patent Literature 1: JP 2017-210637A

### SUMMARY OF INVENTION

#### Technical Problem

The description of the above literature has room for reconsideration from the viewpoint of productivity in the manufacture of an electrode catalyst for water electrolysis by using an ink. Therefore, the present disclosure provides a novel ink for water electrolysis electrode catalyst, the ink being advantageous from the viewpoint of productivity in the manufacture of an electrode catalyst for water electrolysis.

#### Solution to Problem

The present disclosure provides an ink for water electrolysis electrode catalyst, including:

a catalyst including at least one transition metal; a support including a transition metal and supporting the catalyst; an organic polymer; and a solvent including water, wherein
the organic polymer includes a water-insoluble polymer and a nonionic water-soluble polymer.

#### Advantageous Effects of Invention

According to the present disclosure, a novel ink for water electrolysis electrode catalyst is provided, the ink is advantageous from the viewpoint of productivity in the manufacture of an electrode catalyst for water electrolysis.

### BRIEF DESCRIPTION OF DRAWINGS

FIG. 1 is a diagram schematically showing an ink for water electrolysis electrode catalyst according to a first embodiment.
FIG. 2 is a diagram schematically showing an example of a crystal structure of a layered double hydroxide (LDH).
FIG. 3 is a cross-sectional view schematically showing an example of a water electrolysis cell according to a second embodiment.
FIG. 4 is a cross-sectional view schematically showing an example of a water electrolysis apparatus according to a third embodiment.
FIG. 5 is a cross-sectional view schematically showing an example of a water electrolysis cell according to a fourth embodiment.

FIG. 6 is a cross-sectional view schematically showing an example of a water electrolysis apparatus according to a fifth embodiment.

FIG. 7 is a graph showing results of NMR measurement on samples derived from electrode catalyst layers.

DESCRIPTION OF EMBODIMENTS

(Findings on which the present disclosure is based)

Use of renewable energy sources such as solar power and wind power has been attracting attention as a measure against global warming. In the field of renewable energy power generation, attention is being focused on improving energy efficiency by utilizing surplus electricity. Therefore, methods of producing hydrogen from surplus electricity and storing the hydrogen are being considered.

Electrolysis of water is a possible method for producing hydrogen from surplus electricity. In order to produce hydrogen affordably and stably, there is a demand for development of a highly efficient, long-life water electrolysis apparatus. The main components of a water electrolysis apparatus include, for example, a membrane electrode assembly (MEA) including a gas diffusion layer, an electrode catalyst layer, and an electrolyte membrane.

For example, in order to manufacture an MEA, it is possible to prepare an ink for water electrolysis electrode catalyst. For example, a mixture liquid that can be used as the ink is prepared by dispersing, in a solvent including water, a catalyst and an organic polymer including a water-insoluble polymer. For example, in a case of manufacturing an MEA by using an ink for water electrolysis electrode catalyst, the ink for water electrolysis electrode catalyst is applied to a substrate such as an electrolyte membrane or a gas diffusion layer. Examples of methods for applying the ink for water electrolysis electrode catalyst to a substrate include spray coating, die coating, slit coating, dip coating, and inkjet method. Thereby, an electrode catalyst layer including an electrode catalyst is obtained for at least one of an anode and a cathode of a water electrolysis apparatus.

In an ink for water electrolysis electrode catalyst, for example, when solids such as a catalyst, a catalyst support, and a water-insoluble polymer aggregate, the apparent particle diameter of the solids increases. This can cause nozzle clogging in an inkjet device in a case of applying the ink for water electrolysis electrode catalyst to a substrate, for example, by an inkjet method. Further, this may make it difficult to adjust the thickness of the electrode catalyst layer to be uniform. This can result in inconsistent electrode performance, increased cost for manufacturing electrodes, and low productivity in the manufacture of electrodes. Therefore, it is important to suppress the aggregation of solids such as a catalyst, a catalyst support, and a water-insoluble polymer in an ink for water electrolysis electrode catalyst. In other words, it is important that the ink for water electrolysis electrode catalyst is designed such that the components included in the ink for water electrolysis electrode catalyst have appropriate affinity to a solvent including water.

An increase in the apparent particle diameter of solids such as a catalyst, a catalyst support, and a water-insoluble polymer significantly affects the dispersibility of the solids in an ink for water electrolysis electrode catalyst. The relation between the particle diameter of the solids and their settling velocity can be evaluated, for example, according to the Stokes' equation (1) described below. In the equation (1), v is the settling velocity. $\rho_S$ is the density of the solids. $\rho_W$ is the density of the solvent. g is the gravitational acceleration. $\eta$ is the viscosity of the solvent. And, r is the radius of particles of the solids.

$$v = \{(\rho_S - \rho_W)g/72\eta\}r^2 \qquad \text{Equation (1)}$$

According to the equation (1), when the apparent particle diameter of the solids included in the ink for water electrolysis electrode catalyst increases, the settling velocity of the solids increases. **In** other words, when the apparent particle diameter of the solids in the ink for water electrolysis electrode catalyst increases, the dispersibility of the solids in the ink for water electrolysis electrode catalyst decreases. Insufficient dispersibility causes a problem that the amount of catalyst supported on the substrate and the thickness of the electrode catalyst layer become unstable in the application of the ink for water electrolysis electrode catalyst onto the substrate, and this decreases the productivity in the manufacture of the electrode catalyst layer. The catalyst support including a transition metal has the advantage of being more resistant to oxidation and thus more durable compared to a case where the catalyst support is a carbon material. On the other hand, when the catalyst support includes a transition metal, compared to a case where the catalyst support is a carbon material, the particle diameter of the solids increases, and the density $\rho_S$ of the solids is likely to increase, and thus, the settling velocity of the solids is likely to increase. As a result, the dispersibility of solids is likely to decrease. For example, the density of a carbon material is 2 g/cm$^3$, while the density of the transition metal Ni can reach approximately 9 g/cm$^3$. As a result of keen studies under such circumstances, the present inventors have discovered that by adding an organic polymer including a nonionic water-soluble polymer to the ink for water electrolysis electrode catalyst, the dispersibility of the solids in the ink for water electrolysis electrode catalyst can increase. The addition of nonionic water-soluble polymer is expected

to enhance the affinity between the solvent including water and the solids that may include a support including a transition metal. As a result, the productivity in the manufacture of an electrode catalyst layer is less likely to decrease. For example, in a case where the catalyst support is a carbon material, the above issues are less likely to occur because the settling velocity of the solids is low.

Embodiments of the present disclosure are described below with reference to the attached drawings. The present disclosure is not limited to the following embodiments. The embodiments described below are all intended to provide comprehensive or specific examples. Therefore, the numerical values, the shapes, the materials, the components, the positions of the components, the connection forms or the like shown in the following embodiments are simply intended to demonstrate examples, but are not intended to limit the present disclosure. Among the components in the following embodiments, the components that are not described in the independent claims indicating the highest-level concept are described as optional components. The drawings show each component schematically to facilitate understanding, so that the shapes, the dimensional ratios and the like may not be accurately depicted.

(First Embodiment)

FIG. 1 is a diagram schematically showing an ink for water electrolysis electrode catalyst according to a first embodiment. As shown in FIG. 1, an ink 1a for water electrolysis electrode catalyst includes a catalyst 11, a support 15, an organic polymer 12, and a solvent 13. The catalyst 11 includes at least one transition metal. The support 15, which supports the catalyst 11, includes a transition metal. The solvent 13 includes water.

The organic polymer 12 includes a water-insoluble polymer 12b and a nonionic water-soluble polymer 12a. This enhances the affinity between the solvent 13 and the solids, where the solids include the catalyst 11, the support 15, and the water-insoluble polymer 12b. In addition, a steric hindrance caused by the organic polymer 12 including the nonionic water-soluble polymer 12a may suppress aggregation of pieces constituting the catalyst 11. As a result, the dispersibility of the solids in the ink 1a for water electrolysis electrode catalyst is likely to increase, and the productivity in the manufacture of the electrode catalyst layer using the ink 1a for water electrolysis electrode catalyst is less likely to decrease.

The nonionic water-soluble polymer 12a is present, for example, on at least a portion of the surface of the catalyst 11. The nonionic water-soluble polymer 12a may also be present between the pieces constituting the catalyst 11. The nonionic water-soluble polymer 12a may be in contact with the catalyst 11 or may coat at least a portion of the surface of the catalyst 11. The type and the amount of the nonionic water-soluble polymer 12a included in the ink 1a for water electrolysis electrode catalyst can be qualitatively and quantitatively determined by mass spectrometry (MS) or nuclear magnetic resonance (NMR).

Since the nonionic water-soluble polymer 12a is water-soluble, it may be eluted and removed from the electrode catalyst layer when water electrolysis is performed using an electrode equipped with an electrode catalyst layer manufactured using the ink 1a for water electrolysis electrode catalyst. Therefore, the electrode catalyst layer manufactured using the ink 1a for water electrolysis electrode catalyst is likely to exhibit high activity.

The content of the nonionic water-soluble polymer 12a in the solids of the ink 1a for water electrolysis electrode catalyst is not limited to a specific value. The content may be, for example, 5 mass% or more. In this case, the nonionic water-soluble polymer 12a is likely to be present in a desired state on the surface of catalyst 11 and between the pieces constituting the catalyst 11, whereby the dispersibility of the solids in the ink 1a for water electrolysis electrode catalyst is more likely to increase.

The content of the nonionic water-soluble polymer 12a in the solids of the ink 1a for water electrolysis electrode catalyst is preferably 6 mass% or more, and more preferably 7.5 mass% or more. The content of the nonionic water-soluble polymer 12a in the solids of the ink 1a for water electrolysis electrode catalyst is, for example, 99 mass% or less.

The nonionic water-soluble polymer 12a is not limited to a specific polymer. The nonionic water-soluble polymer 12a does not have a cationic or anionic functional group. This may make it possible to enhance the affinity between the solids and the solvent 13 while avoiding influences on the electrostatic action to the catalyst 11 in the solids.

The nonionic water-soluble polymer 12a does not include, for example, a hydrophobic group such as an alkyl group or a phenyl group. As a result, the nonionic water-soluble polymer 12a is likely to disperse favorably in the solvent 13, and the action of the nonionic water-soluble polymer 12a to enhance the affinity between the solvent 13 and the solids is more likely to be exhibited, where the solids include the catalyst 11, the support 15, and the organic polymer 12.

The nonionic water-soluble polymer 12a includes, for example, at least one selected from the group consisting of polyvinylpyrrolidone, polyvinyl alcohol, polyethylene oxide, polyacrylamide, and polyethylene glycol. In this case, the dispersibility of the solids in the ink 1a for water electrolysis electrode catalyst is more likely to increase.

The catalyst 11 exhibits activity with respect to a reaction for evolving a gas such as hydrogen or oxygen, at an anode or a cathode of a water electrolysis cell, for example. The transition metal included in the catalyst 11 is not limited to a specific transition metal. The transition metal may include, for example, at least one selected from the group consisting of V, Cr, Mn, Fe, Co, Ni, Cu, W, and Ru. In this case, an electrode catalyst layer exhibiting high activity can be easily obtained by use of the ink 1a for water electrolysis electrode catalyst.

The transition metal included in the catalyst 11 may include at least one selected from the group consisting of Fe and Ni. In this case, an electrode catalyst layer exhibiting high activity is more easily obtained by use of the ink 1a for water electrolysis electrode catalyst.

The catalyst 11 may be, for example, a hydroxide of a transition metal. In this case, the affinity between the nonionic water-soluble polymer 12a and the catalyst 11 is high, and thus, dispersibility of the solids in the ink 1a for water electrolysis electrode catalyst is more likely to increase.

In a case where the catalyst 11 is a hydroxide of a transition metal, the hydroxide may be a layered double hydroxide (LDH). In this case, the affinity between the nonionic water-soluble polymer 12a and the catalyst 11 is high, and thus, the dispersibility of the solids in the ink 1a for water electrolysis electrode catalyst is more likely to increase. In addition, an electrode catalyst layer exhibiting high activity is more easily obtained by use of the ink 1a for water electrolysis electrode catalyst.

The catalyst 11 may, for example, include the LDH as the main component. In the present Description, the main component refers to a component present in the largest amount by mass. The LDH includes, for example, two or more types of transition metals. The LDH includes, for example, at least two selected from the group consisting of V, Cr, Mn, Fe, Co, Ni, Cu, W, and Ru. The LDH has, for example, a composition represented by the following Formula (1). In Formula (1), $M_1^{2+}$ is a divalent transition metal ion, $M_2^{3+}$ is a trivalent transition metal ion, and $A^{n-}$ is an interlayer anion. x is a rational number satisfying $0 < x < 1$. y is a number corresponding to a required amount for charge balance. n is an integer, and m is an appropriate rational number.

$$[M_1{}^{2+}{}_{1-x}M_2{}^{3+}{}_x(OH)_2][yA^{n-}\bullet mH_2O] \qquad \text{Formula (1)}$$

The LDH included in the catalyst 11 may, for example, include Ni and Fe. In this case, in Formula (1), $M_1$ is Ni, and $M_2$ is Fe. In this case, an electrode catalyst layer exhibiting high activity is more easily obtained by use of the ink 1a for water electrolysis electrode catalyst. For example, compared to the case where $M_1$ is Co, the high activity of the electrode catalyst layer is more easily exhibited.

In the LDH included in the catalyst 11, the ratio of the amount of substance of Fe to the total amount of substance of Ni and Fe is not limited to a specific value. This ratio may be 0.25 or more and 0.5 or less. In this case, an electrode catalyst layer exhibiting high activity is more easily obtained by use of the ink 1a for water electrolysis electrode catalyst.

The LDH may form primary particles including one or more small single-crystal regions and secondary particles formed by aggregation of the primary particles. The average particle diameter of the LDH is the value obtained by dividing the area of the two-dimensional distribution chart by the total number of particles, where the two-dimensional distribution chart represents the relation between a particle diameter and a distribution in the particle diameter distribution obtained by small-angle X-ray scattering (SAXS). Here, a distribution refers to a numerical value proportional to the total volume occupied by the number of particles of the corresponding particle diameter. The area of the two-dimensional distribution chart is, for example, the product of the particle diameter and the number of particles corresponding to the particle diameter.

As described above, in the LDH, $A^{n-}$ is an interlayer ion. $A^{n-}$ is an inorganic ion or an organic ion. Examples of the inorganic ion include $CO_3^{2-}$, $NO_3^-$, $Cl^-$, $SO_4^{2-}$, $Br^-$, $OH^-$, $F^-$, $I^-$, $Si_2O_5^{2-}$, $B_4O_5(OH)_4^{2-}$, and $PO_4^{3-}$. Examples of the organic ion include $CH_3(CH_2)_nSO_4^-$, $CH_3(CH_2)_nCOO^-$, $CH_3(CH_2)_nPO_4^-$, and $CH_3(CH_2)_nNO_3^-$. $A^{n-}$ is an anion to be inserted between layers of metal hydroxide together with water molecules. The charge and ion size of $A^{n-}$ are not limited to specific values. The LDH may include one kind of $A^{n-}$ or multiple kinds of $A^{n-}$.

FIG. 2 is a diagram schematically showing an example of a crystal structure of an LDH 11a represented by Composition Formula (1). As shown in FIG. 2, the LDH 11a has $OH^-$ at each vertex of each octahedron centered on $M_1^{2+}$ or $M_2^{3+}$. The metal hydroxide is represented by $[(M_1)_{1-x}(M_2)_x(OH)_2]^{x+}$. The metal hydroxide has a layered structure in which the octahedra of the hydroxide share edges and are linked in two dimensions. Between the layers of the metal hydroxide, anions and water molecules are present. The layers of the metal hydroxide function as host layers 11h, and the anions and the water molecules for a guest layer are interposed therebetween. In other words, the LDH 11a as a whole has a sheet-like structure in which the host layers 11h of the metal hydroxide and a guest layer 11g of the anions and the water molecules are laminated alternately. The LDH 11a has a structure in which some of $M_1^{2+}$ included in the metal hydroxide layer is replaced by $M_2^{3+}$. Therefore, usually the surface of the LDH 11a is positively charged.

The LDH 11a may include a chelating agent. In this case, the chelating agent may be coordinated to the transition metal ions in the LDH 11a. Thereby, the dispersion stability of the catalyst 11 including the LDH 11a is likely to be enhanced. Since the LDH 11a includes the chelating agent, the particle diameter of the LDH 11a is likely to be smaller. As a result, the surface area of the catalyst 11 including the LDH 11a is likely to increase, and thus, the activity of the electrode catalyst layer obtained by use of the ink 1a for water electrolysis electrode catalyst is more likely to be enhanced. The average particle diameter of the LDH 11a is not limited to a specific value. The average particle diameter may be 100 nm or less, 50 nm or less, or 10 nm or less. The average particle diameter may be 1.5 nm or more, or 2 nm or more.

The chelating agent included in the LDH 11a is not limited to a specific chelating agent. The chelating agent is, for

example, an organic compound capable of coordinating to a transition metal in the LDH. The chelating agent may include at least one selected from the group consisting of a bidentate organic ligand and a tridentate organic ligand. Examples of the chelating agents include β-diketone, β-ketoester, and hydroxycarboxylic acid. Examples of the β-diketones include acetylacetone (ACAC), trifluoroacetylacetone, hexafluoroacetylacetone, benzoylacetone, tenoyl trifluoroacetone, dipivaloylmethane, dibenzoylmethane, and ascorbic acid. Examples of the β-keto esters include methyl acetoacetate, ethyl acetoacetate, allyl acetoacetate, benzyl acetoacetate, n-propyl acetoacetate, iso-propyl acetoacetate, n-butyl acetoacetate, iso-butyl acetoacetate, tert-butyl acetoacetate, 2-methoxyethyl acetoacetate, and methyl 3-oxopentanoate. Examples of the hydroxycarboxylic acids and their salts include tartaric acid, citric acid, malic acid, gluconic acid, ferulic acid, lactic acid, glucuronic acid, and their salts. The chelating agent may include at least one selected from the group consisting of acetylacetone and trisodium citrate. The chelating agent may include at least one selected from the group consisting of acetylacetone and trisodium citrate.

The catalyst 11 is, for example, particulate. The shape of the catalyst 11 is not limited to any specific shape. The shape of the catalyst 11 is, for example, spherical, ellipsoidal, fibrous, or flaky.

As shown in FIG. 1, the catalyst 11 is supported on the support 15. With this configuration, the catalyst 11 is stably arranged on the support 15, so that the activity of the electrode catalyst layer obtained by use of the ink 1a for water electrolysis electrode catalyst is more likely to be enhanced. The surface of the support 15 may be coated with the catalyst 11. The entire surface of the support 15 may be coated with the catalyst 11, or only a portion of the surface of the support 15 may be coated with the catalyst 11. The catalyst 11 may be, for example, in contact with the surface of the support 15. For example, a coating layer including the catalyst 11 may be formed on the surface of the support 15. The coating layer may, for example, include the catalyst 11 as the main component.

The material of the support 15 includes a transition metal, and it is not limited to any specific material as long as the support 15 is capable of supporting the catalyst 11. Examples of transition metals include V, Cr, Mn, Fe, Co, Ni, Cu, W, and Ru. In this case, the activity of the electrode catalyst layer obtained by use of the ink 1a for water electrolysis electrode catalyst is more likely to be enhanced. The support 15 may include only one material selected from these materials or may include multiple materials. When the support 15 includes a plurality of transition metals, the support 15 may include an alloy including a plurality of transition metals. The support 15 may include, for example, porous materials such as foam.

The shape of the support 15 is not limited to any specific shape. The support is, for example, particulate. Examples of the shape of the support 15 include spherical, ellipsoidal, fibrous, and flaky. The size of the support 15 is not limited to a specific value. For example, in a case where the support 15 is spherical, the average particle diameter of the support 15 is not limited to a specific value. The average particle diameter of the support may be 100 nm or less, 50 nm or less, 20 nm or less, or 10 nm or less. As a result, the support 15 can easily support a sufficient amount of the catalyst 11. Furthermore, with such a configuration, the electrode catalyst layer obtained from the ink 1a for water electrolysis electrode catalyst easily exhibits excellent durability, for example, in the anodic reaction during water electrolysis. The average particle diameter of the support 15 can be determined, for example, by observing the support 15, using a transmission electron microscope (TEM). Specifically, the average particle diameter can be determined by randomly-selecting fifty particles of the support 15 that can be observed as a whole, defining the average of the maximum diameter and the minimum diameter of each particle as the particle diameter of the support 15, and then calculating the arithmetic mean value of the particle diameters.

As described above, the organic polymer 12 includes a water-insoluble polymer 12b. Thereby, the water-insoluble polymer 12b is less likely to be dissolved into water even when the electrode catalyst layer obtained by using the ink 1a for water electrolysis electrode catalyst gets into contact with water during water electrolysis. As a result, the mechanical strength, the shape, and the catalytic activity of the electrode catalyst layer can be easily maintained. The water-insoluble polymer 12b disperses, for example, the catalyst 11 in the solod 13. The water-insoluble polymer 12b may be present on the surface of the catalyst 11. The water-insoluble polymer 12b may be present, for example, on at least a portion of the surface of the catalyst 11. The water-insoluble polymer 12b may be present between pieces constituting the catalyst 11. The water-insoluble polymer 12b may be in contact with the catalyst 11. At least a portion of the surface of catalyst 11 may be coated with the water-insoluble polymer 12b. Since the water-insoluble polymer 12b is included in the ink 1a for water electrolysis electrode catalyst, steric hindrance caused by the water-insoluble polymer 12b can suppress aggregation of the pieces constituting the catalyst 11. As a result, the solids in the ink 1a for water electrolysis electrode catalyst are likely to exhibit superior dispersibility, where the solids include the catalyst 11, the support 15, and the water-insoluble polymer 12b. **In** addition, since the water-insoluble polymer 12b is included in the ink 1a for water electrolysis electrode catalyst, when an electrode catalyst layer is formed on a substrate like a base by use of the ink 1a for water electrolysis electrode catalyst, adhesion between the substrate and the electrode catalyst layer is likely to be improved. As a result, a water electrolysis electrode with excellent durability can be provided.

The water-insoluble polymer 12b is, for example, an organic polymer having ionic conductivity. The water-insoluble polymer 12b may have cation conductivity, or may have anion conductivity. The cation conductivity is, for example, proton conductivity. Since the water-insoluble polymer 12b has ionic conductivity, an electrode catalyst layer that exhibits high activity can be obtained further easily by use of the ink 1a for water electrolysis electrode catalyst.

The water-insoluble polymer 12b may be, for example, an organic polymer that does not have ionic conductivity. In other words, the water-insoluble polymer 12b may be a neutral organic polymer. "Neutral" means that the organic polymer include neither an anion-exchange group nor a cation-exchange group. Similarly in this case, the steric hindrance caused by the water-insoluble polymer 12b may suppress aggregation of pieces constituting the catalyst 11. As a result, the solids in the ink 1a for water electrolysis electrode catalyst are more likely to exhibit superior dispersibility, where the solids include the catalyst 11, the support 15, and the organic polymer 12. An example of organic polymers that does not have ionic conductivity is polytetrafluoroethylene (PTFE).

The water-insoluble polymer 12b includes, for example, a fluoropolymer. The fluoropolymer is an organic polymer having fluorine atoms. The fluoropolymer can function as the water-insoluble polymer 12b. In this case, the thermal stability and the electrochemical stability of the water-insoluble polymer 12b is likely to be enhanced. As a result, the mechanical strength and the chemical stability of the electrode catalyst layer obtained by use of the ink 1a for water electrolysis electrode catalyst are likely to be enhanced. In addition, the alkaline resistance of the electrode catalyst layer is likely to be enhanced.

The fluoropolymer may be an ion-exchange resin including fluorine, or an organic polymer having fluorine and a sulfonic acid ion group. The organic polymer 12 may include, for example, a perfluorocarbon polymer or a perfluoroalkyl sulfonic acid-based polymer.

The organic polymer including fluorine and a sulfonic acid ion group is, for example, Nafion (registered trademark). Nafion is an organic polymer having proton conductivity. Nafion has the following chemical formula (I). In the chemical formula (I), x and y satisfy $1 \leq y/x \leq 9$. n is an integer of 0 or more and 2 or less.

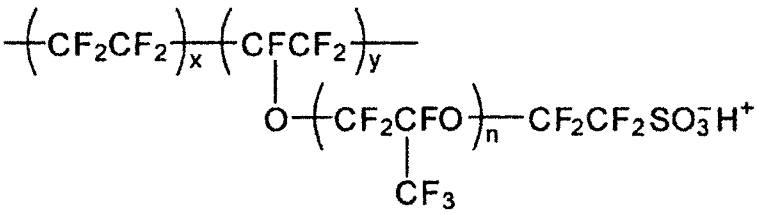

(Chemical formula I)

In the case where the organic polymer 12 includes an organic polymer having ionic conductivity, the equivalent mass (EW) of the organic polymer having ionic conductivity is not limited to a specific value. The equivalent mass refers to the mass of the organic polymer per mole of an anionic functional group such as a sulfonic acid ion group. The equivalent mass of the organic polymer may be 1100 g/mol or less, or 900 g/mol or less. Thereby, aggregation of the pieces constituting the catalyst 11 can be suppressed more easily. As a result, in the ink 1a for water electrolysis electrode catalyst, the solids including the catalyst 11, the support 15, and the organic polymer 12 is more likely to exhibit superior dispersibility. The EW of the organic polymer having ionic conductivity may be 720 g/mol or more, or 980 g/mol or more. The EW of the organic polymer having ionic conductivity is, for example, 720 g/mol or more and 1100 g/mol or less.

The solvent 13 disperses the catalyst 11 and the organic polymer 12 in the ink 1a for water electrolysis electrode catalyst. The ink 1a for water electrolysis electrode catalyst may be prepared, for example, by adding a solvent to a dispersion liquid of the catalyst 11 or the organic polymer 12. In this case, the solvent 13 is a mixture of a solvent to be added and a solvent derived from the dispersion liquid of the catalyst 11 or the organic polymer 12. The solvent 13 may include water alone or may include two or more types of solvents including water. In a case where the solvent 13 includes multiple types of solvents, each solvent is mutually compatible. In the solvent 13, it is desirable that each solvent is sufficiently compatible with each other and does not undergo phase separation. In the solvent 13, the type of each solvent and the mixing ratio of each solvent are adjusted, for example, so that phase separation does not occur at room temperature.

As described above, the solvent 13 may include two types of solvents including water, for example, the solvent 13 may include a first solvent and a second solvent. The first solvent and the second solvent each are not limited to specific solvents. The first solvent and the second solvent each are, for example, polar solvents. The solvent 13 including water is desirable from the viewpoint of raw material costs, disposal costs, or environmental impact. In the solvent 13, the first solvent may be water, and the second solvent may be a solvent that has excellent compatibility with water. An example of the second solvent is an alcohol. The alcohol may be an aliphatic alcohol. Examples of the alcohols include ethanol, 1-propanol, and 2-propanol. The alcohol may include only one type of alcohol selected from these, or may include multiple types of alcohol.

The solvent 13 may include, for example, water and alcohol. Thereby, the organic polymer 12 is less likely to aggregate, the nonionic water-soluble polymer 12a easily disperse, and the organic polymer 12 is likely to be present on the surface of the catalyst 11 in a state where the catalyst 11 and the organic polymer are adsorbed. In addition, in the ink 1a

for water electrolysis electrode catalyst, the affinity between the catalyst 11 and the solvent 13 is maintained favorably, enabling the catalyst 11 to disperse favorably in the ink 1a for water electrolysis electrode catalyst. Furthermore, in the ink 1a for water electrolysis electrode catalyst, the organic polymer 12 is less likely to separate from the surface of the catalyst 11. As a result, in the ink 1a for water electrolysis electrode catalyst, the catalyst 11 and the organic polymer 12 are more likely to exhibit superior dispersibility.

The solvent 13 included in the ink 1a for water electrolysis electrode catalyst can be qualitatively and quantitatively determined by, for example, gas chromatography (GC), mass spectrometry (MS), or nuclear magnetic resonance (NMR). In a case where the solvent 13 included in the ink 1a for water electrolysis electrode catalyst is a mixed solvent including multiple types of solvents, the types of each solvent included in the mixed solvent and the ratio of the content of each solvent can also be determined by use of the method described above.

In the ink 1a for water electrolysis electrode catalyst, for example, a composite 20 is formed of the catalyst 11, the nonionic water-soluble polymer 12a, the water-insoluble polymer 12b, and the support 15. This composite 20 can be provided as a catalyst material.

An electrode catalyst can be prepared using the ink 1a for water electrolysis electrode catalyst. This electrode catalyst includes the catalyst 11 and the organic polymer 12, where the organic polymer 12 includes the water-insoluble polymer 12b and the nonionic water-soluble polymer 12a. This electrode catalyst may exhibit activity with respect to a reaction for evolving a gas such as hydrogen and oxygen in the anode or the cathode of a water electrolysis cell. This electrode catalyst is, for example, a solidified form of the ink 1a for water electrolysis electrode catalyst.

(Second Embodiment)

FIG. 3 is a cross-sectional view schematically showing an example of a water electrolysis cell according to a second embodiment. As shown in FIG. 3, a water electrolysis cell 2 includes an electrolyte membrane 2p, an anode 2a, and a cathode 2b. The electrolyte membrane 2p is disposed between the anode 2a and the cathode 2b, for example. At least one selected from the anode 2a and cathode 2b includes an electrode catalyst described in the first embodiment. With this configuration, overvoltage in the water electrolysis cell 2 is likely to decrease.

The electrolyte membrane 2p may be an electrolyte membrane having ionic conductivity. The electrolyte membrane 2p is not limited to a specific type. The electrolyte membrane 2p may include an anion-exchange membrane. The electrolyte membrane 2p may include a cation-exchange membrane.

The electrolyte membrane 2p is configured such that oxygen gas evolved at the anode 2a and hydrogen gas evolved at the cathode 2b are less likely to mix with each other. The anode 2a may, for example, include an electrode catalyst layer 2m. The electrode catalyst layer 2m may be provided on one of the main surfaces of the electrolyte membrane 2p. "Main surface" refers to the surface of the electrolyte membrane 2p, the surface having the largest area in the electrolyte membrane 2p. The electrode catalyst layer 2m may include the electrode catalyst described in the first embodiment. The anode 2a may include, for example, a gas diffusion layer 2n. The gas diffusion layer 2n is a porous and electroconductive layer disposed on the electrode catalyst layer 2m.

The cathode 2b may include, for example, an electrode catalyst layer 2j. The electrode catalyst layer 2j may be provided on the other main surface of the electrolyte membrane 2p. In other words, the electrode catalyst layer 2j may be provided on the main surface opposite to the main surface on which the electrode catalyst layer 2m is provided, with respect to the electrolyte membrane 2p. The electrode catalyst included in electrode catalyst layer 2j is not limited to a specific catalyst. The electrode catalyst may include noble metals such as platinum, or may be the electrode catalyst described in the first embodiment. The cathode 2b includes, for example, a gas diffusion layer 2k. The gas diffusion layer 2k is a porous and electroconductive layer. The gas diffusion layer 2k is, for example, disposed on the electrode catalyst layer 2j.

(Third Embodiment)

FIG. 4 is a cross-sectional view schematically showing an example of a water electrolysis apparatus according to a third embodiment. As shown in FIG. 4, a water electrolysis apparatus 3 includes a water electrolysis cell 2 and a voltage applying unit 40. The voltage applying unit 40 is connected to the anode 2a and the cathode 2b and applies a voltage between the anode 2a and the cathode 2b.

The voltage applied by the voltage applying unit 40 causes the potential at the anode 2a to become higher and the potential at the cathode 2b to become lower. The voltage applying unit 40 is not limited to a specific device as long as it can apply a voltage between the anode 2a and the cathode 2b. The voltage applying unit 40 may be a device for adjusting the voltage applied between the anode 2a and the cathode 2b. Specifically, when the voltage applying unit 40 is connected to a DC power source such as a battery, a solar cell, or a fuel cell, the voltage applying unit 40 includes a DC/DC converter. When the voltage applying unit 40 is connected to an AC power source such as a commercial power supply, the voltage applying unit 40 includes an AC/DC converter. The voltage applying unit 40 may also be an electric power-type power

source that adjusts the voltage applied between the anode 2a and the cathode 2b, as well as the current flowing between the anode 2a and the cathode 2b, so that the power supplied to the water electrolysis apparatus 3 reaches a predetermined set value. With the configuration, overvoltage is likely to decrease in the water electrolysis apparatus 3.

(Fourth Embodiment)

FIG. 5 is a cross-sectional view schematically showing an example of a water electrolysis cell according to a fourth embodiment. As shown in FIG. 5, a water electrolysis cell 4 includes a separator 4p, an anode 4a, and a cathode 4b. The separator 4p separates a first space 4m and a second space 4n. The anode 4a is disposed in the first space 4m. The cathode 4b is disposed in the second space 4n. At least one selected from the group consisting of the anode 4a and cathode 4b includes the electrode catalyst described in the first embodiment. With this configuration, the overvoltage in the water electrolysis cell 4 is likely to decrease.

The water electrolysis cell 4 is, for example, an alkaline water electrolysis cell using an alkaline aqueous solution. In alkaline water electrolysis, an alkaline aqueous solution is used. Examples of the alkaline aqueous solutions include an aqueous solution of potassium hydroxide and an aqueous solution of sodium hydroxide.

The water electrolysis cell 4 includes an electrolysis tank 4s. The interior of the electrolysis tank 4s is separated into a first space 4m and a second space 4n by a separator 4p. The anode 4a and cathode 4b each include, for example, an electrode catalyst layer. These electrode catalyst layers may include, for example, the electrode catalyst described in the first embodiment, or may include another electrode catalyst for alkaline water electrolysis.

The separator 4p is, for example, a separator for alkaline water electrolysis. The anode 4a may be arranged in contact with the separator 4p, or the anode 4a and the separator 4p may be separated from each other. The cathode 4b may be arranged in contact with separator 4p, or the cathode 4b and the separator 4p may be separated from each other.

In alkaline water electrolysis, hydrogen gas and oxygen gas are evolved by the electrolysis of an alkaline aqueous solution. For alkaline water electrolysis, for example, an aqueous solution including a hydroxide of an alkali metal or an alkaline earth metal is supplied to the first space 4m of the water electrolysis cell 4. In addition, an alkaline aqueous solution may be supplied to the first space 4m of the water electrolysis cell 4. Electrolysis is performed while alkaline aqueous solutions of predetermined concentrations are discharged from the first space 4m and the second space 4n, thereby evolving hydrogen gas and oxygen gas.

With this configuration, since at least one of the anode 4a and the cathode 4b includes the electrode catalyst described in the first embodiment, the overvoltage in the water electrolysis cell 4 is likely to decrease.

(Fifth Embodiment)

FIG. 6 is a cross-sectional view schematically showing an example of a water electrolysis apparatus according to the fifth embodiment. As shown in FIG. 6, the water electrolysis apparatus 5 includes a water electrolysis cell 4 and a voltage applying unit 40. The voltage applying unit 40 is connected to the anode 4a and the cathode 4b, and applies a voltage between the anode 4a and the cathode 4b.

The water electrolysis apparatus 5 is, for example, an alkaline water electrolysis apparatus that uses an alkaline aqueous solution. The water electrolysis cell 4 is configured similarly to the water electrolysis cell 4 described in the fourth embodiment. With the above configuration, the overvoltage in the water electrolysis apparatus 5 is likely to decrease.

(Appendix)

From the above description, the following techniques are disclosed.

(Technique 1)

An ink for water electrolysis electrode catalyst, including:

a catalyst including at least one transition metal;
a support including a transition metal and supporting the catalyst;
an organic polymer; and
a solvent including water, wherein
the organic polymer includes a water-insoluble polymer and a nonionic water-soluble polymer.

(Technique 2)

The ink according to Technique 1, wherein

a content of the nonionic water-soluble polymer in solids of the ink is 5 mass% or more.

(Technique 3)

The ink according to Technique 1 or 2, wherein
the nonionic water-soluble polymer is free of a hydrophobic group.

(Technique 4)

The ink according to any one of Techniques 1 to 3, wherein
the nonionic water-soluble polymer includes at least one selected from the group consisting of polyvinylpyrrolidone, polyvinyl alcohol, polyethylene oxide, polyacrylamide, and polyethylene glycol.

(Technique 5)

The ink according to any one of Techniques 1 to 4, wherein
the transition metal included in the catalyst includes at least one selected from the group consisting of V, Cr, Mn, Fe, Co, Ni, Cu, W, and Ru.

(Technique 6)

The ink according to Technique 5, wherein
the transition metal included in the catalyst includes at least one selected from the group consisting of Fe and Ni.

(Technique 7)

The ink according to any one of Techniques 1 to 6, wherein
the catalyst is a hydroxide of the transition metal.

(Technique 8)

The ink according to Technique 7, wherein
the hydroxide is a layered double hydroxide.

(Technique 9)

The ink according to any one of Techniques 1 to 8, wherein
the water-insoluble polymer includes a fluoropolymer.

(Technique 10)

The ink according to Technique 9, wherein
the fluoropolymer includes a perfluoroalkyl sulfonic acid-based polymer.

(Technique 11)

An electrode catalyst including:

a catalyst including at least one transition metal;
a support including a transition metal and supporting the catalyst; and
an organic polymer, wherein
the organic polymer includes a water-insoluble polymer and a nonionic water-soluble polymer.

(Technique 12)

A water electrolysis cell, including:

an anode;

a cathode; and
an electrolyte membrane disposed between the anode and the cathode, wherein
at least one of the anode and the cathode includes the electrode catalyst according to Technique 11.

(Technique 13)

The water electrolysis cell according to Technique 12, wherein
the electrolyte membrane includes an anion-exchange membrane.

(Technique 14)

The water electrolysis cell according to Technique 12, wherein
the electrolyte membrane includes a cation-exchange membrane.

(Technique 15)

A water electrolysis cell, including:

a separator separating a first space and a second space;
an anode disposed in the first space; and
a cathode disposed in the second space, wherein
at least one of the anode and the cathode includes the electrode catalyst according to Technique 11.

(Technique 16)

A water electrolysis apparatus, including:

the water electrolysis cell according to any one of Techniques 12 to 15; and
a voltage applying unit that applies a voltage between the anode and the cathode, the voltage applying unit being connected to the anode and the cathode.

EXAMPLES

The present disclosure is further explained in detail by referring to Examples. The following Examples demonstrate a part of the present disclosure, and the present disclosure is not limited to the Examples.

(Example 1)

An Ni-Fe LDH, which is an LDH including Ni and Fe as transition metals, was produced as follows. A mixed solvent of water and ethanol was prepared. The ethanol used here was a JIS Special Grade reagent manufactured by Fujifilm Wako Pure Chemical Corporation. The volume ratio of water to ethanol in the mixed solvent was 2:3. In this mixed solvent, nickel chloride hexahydrate and iron chloride hexahydrate, both manufactured by Fujifilm Wako Pure Chemical Corporation, were dissolved to obtain a solution. In this solution, the total concentration of Ni ions and Fe ions was 1.0 mol/L, and the ratio of the amount of substance of Fe ions to the total amount of substance of Ni ions and Fe ions was 0.33. As a chelating agent, acetylacetone (ACAC) was added to the mixed solvent in an amount of substance equivalent to one-third of the total amount of Ni ions and Fe ions. The solution obtained in this manner was stirred for 30 minutes.

Thereafter, Ni particles as a support were added to this solution, where the Ni particles had a mass equal to the mass of the Ni-Fe LDH that would be produced in a case where all of the Ni and Fe included in this solution were ideally reacted. The Ni particles manufactured by US Research Nanomaterials, Inc. had a particle diameter of 20 nm. Next, to the solution including the Ni-Fe LDH and the Ni particles, propylene oxide (POX) as a pH booster was added in an amount of substance equal to twice the amount of substance of chloride ions in the solution. The resulting solution was stirred for 1 minute. At this time, the POX gradually captured hydrogen ions in the solution, and thus, the pH gradually increased. After allowing the solution to stand for approximately three days, the target sample, namely, a mixture including the Ni-Fe LDH and the Ni particles, was collected.

Into a sample tube, 6.0 g of the mixture including the Ni-Fe LDH and the Ni particles was introduced together with 0.33 g of polyvinylpyrrolidone (product No.: 161-03105) manufactured by Fujifilm Wako Pure Chemical Corporation, to which a mixed solvent prepared in advance by mixing 12.8 mL of ethanol and 13.8 mL of water was added. The mixture was then subjected to ultrasonic treatment for 30 minutes using a desktop type ultrasonic cleaner (Product No.: W-113MK)

manufactured by HONDA ELECTRONICS CO., LTD. Then, using a high-speed stirrer (product No.: T 18 digital ULTRA-TURRAX) manufactured by IKA Japan Co., Ltd., the mixture was stirred for 30 minutes. Later, 4.41 mL of a 20% Nafion dispersion solution (product No.: 322-86733) manufactured by Fujifilm Wako Pure Chemical Corporation was added, and the mixture was stirred again using the high-speed stirrer for 30 minutes to obtain an ink of Example 1. The content of polyvinylpyrrolidone in the solids of the ink according to Example 1 was 5 mass%.

The ink according to Example 1 was introduced into an ultrasonic spray coating system (product name: Exacta-Coat FC) manufactured by SONOTEK Corporation, and applied to an anion-exchange membrane (QPAF-4) manufactured by Takahata Precision Japan Co., Ltd. to form an electrode catalyst layer. The shape of the electrode catalyst layer was square in a plane view, and the area of the electrode catalyst layer was 25 $cm^2$.

(Example 2)

Except for the following points, the same procedure as in Example 1 was followed to prepare an ink and to form an electrode catalyst layer using the ink. The amount of polyvinylpyrrolidone added during ink preparation was set to 0.5 g. The content of polyvinylpyrrolidone in the solids of the ink was 7.5 mass%.

(Example 3)

Except for the following points, the same procedure as in Example 2 was followed to prepare an ink and to form an electrode catalyst layer using the ink. The amount of ethanol added during ink preparation was adjusted to 8.98 mL, and the amount of water was adjusted to 9.98 mL. The content of polyvinylpyrrolidone in the solids of the ink was 7.5 mass%.

(Example 4)

Except for the following points, the same procedure as in Example 1 was followed to prepare an ink and to form an electrode catalyst layer by using the ink. The amount of polyvinylpyrrolidone added during the ink preparation was set to 0.69 g. The content of polyvinylpyrrolidone in the solids of the ink was 10 mass%.

(Comparative Example 1)

An ink was prepared in the same manner as in Example 1 except for omission of polyvinylpyrrolidone, and an electrode catalyst layer was formed using the ink in the same manner as in Example 1.

[Evaluation of ink dispersion stability]

1.0 mL of ink processed using a high-speed stirrer was collected and transferred to a glass sample tube and left to stand. The solid components of the ink were regarded as having been settled at the time a transparent portion was observed in the ink. The time period from the start of ink static placement in the sample tube until sedimentation was determined was measured, thereby evaluating the ink dispersion stability. The results are shown in Table 1.

[Evaluation of variation in amount of supported catalyst material]

The amount of LDH included in the electrode catalyst layer was calculated from the weight of the anion-exchange membrane before and after ink application. The maximum, average, and minimum values of the LDH content in five electrode catalyst layers consecutively formed were calculated. Based on the calculated maximum, average, and minimum values of the LDH, the variation in the supported amount was determined using the following Equation (2). The results are shown in Table 1.

$$\text{Variation in supported amount [\%]} = \{(\text{Maximum value} - \text{Minimum value}) / \text{Average value}\} \times 100/2 \quad \text{Equation (2)}$$

[Evaluation of variation in thickness of catalyst material]

Using a digimatic Indicator (Product No.: ID-C150XB) manufactured by Mitutoyo Corporation, the thickness of an anion-exchange membrane without an electrode catalyst layer was measured, and the thickness of an anion-exchange membrane formed with an electrode catalyst layer was measured. And, the thickness of the electrode catalyst layer was calculated by subtracting the thickness of the anion-exchange membrane. The thickness was measured at five randomly-selected points within the surface where the electrode catalyst layer was formed, and the average value of these measured values was taken as the thickness of the electrode catalyst layer. The maximum, average, and minimum values of the thickness were calculated for the five consecutively formed electrode catalyst layers. The variation in the thickness was calculated based on the following Equation (3) using the maximum, average, and minimum values of the thickness. The results are shown in Table 1.

$$\text{Variation in thickness [\%]} = \{(\text{Maximum value} - \text{Minimum value}) / \text{Average value}\} \times 100/2 \qquad \text{Equation (3)}$$

[Viscosity measurement]

Viscosity of each ink was measured using a Cone & Plate Viscometer (Product No.: DV2TLVCJ0) manufactured by AMETEK BROOKFIELD. The results are shown in Table 1.

[NMR measurement]

The presence of polyvinylpyrrolidone in the electrode catalyst layer was confirmed by an NMR measurement. A powder of 185 mg obtained by scraping off the electrode catalyst layer formed using the method described in Example 2 was immersed in 0.62 g of heavy water (151882-100G manufactured by ISOTEC GmbH) for one day. The powder immersed in the heavy water was then subjected to an ultrasonic treatment at 28 kHz using a three-frequency ultrasonic cleaner VS-100III supplied by AS ONE Corporation, and the resulting extract was used as a measurement sample. The measurement sample was subjected to an NMR measurement using a carbon NMR measurement device AVANCE NEO 700 manufactured by BRUKER. In this NMR measurement, a polyvinylpyrrolidone powder was used as a reference sample. A 5mm CryoProbe was used as the probe. The resonance frequency was adjusted to 175 MHz (13C). This measurement was performed at room temperature. The number of integration cycles was set to 25,000. The results obtained are shown in FIG. 7. In FIG. 7, A indicates a $^{13}$C NMR spectrum of the measurement sample derived from the electrode catalyst layer, and B indicates a $^{13}$C NMR spectrum of the reference sample.

As shown in Table 1, the inks of Examples each were found to have higher dispersion stability in comparison with the ink of Comparative Example 1. In addition, as to the inks of the respective Examples, the variations in the supported amount and the thickness were smaller in comparison with the ink of Comparative Example 1. It is considered that inclusion of polyvinylpyrrolidone as a nonionic water-soluble polymer enhances the dispersion stability of the solids in the ink including Ni particles as a support, thereby reducing the variations in the supported amount and the thickness. Furthermore, the viscosity of the ink of each Example was higher than that of the ink of Comparative Example 1. It is understood that, in the inks of Examples, polyvinylpyrrolidone enhances the affinity of the Ni-Fe LDH and the Nafion with respect to the solvent, thereby promoting the dispersion of the solids in the solvent. As shown in FIG. 7, peaks derived from polyvinylpyrrolidone were confirmed at 17 to 20 ppm, 31 to 35 ppm, and 42 to 46 ppm in the $^{13}$C NMR spectra of A and B. Therefore, it was confirmed that polyvinylpyrrolidone was included in the electrode catalyst layer.

[Table 1]

| | Example 1 | Example 2 | Example 3 | Example 4 | Comparative Example 1 |
|---|---|---|---|---|---|
| PVP content in solids of ink [mass%] | 5 | 7.5· | 7.5 | 10 | 0 |
| Ink viscosity [mPa•s] | 15.3 | 15.7 | 41.4 | 19.4 | 7.5 |
| Dispersion stability [minute] | 18 | 80 | 120 | 90 | 15 |
| Variation in supported amount [%] | - | 3.7 | 1.5 | - | 5.4 |
| Variation in thickness [%] | - | 4.4 | 2.5 | - | 11.5 |

INDUSTRIAL APPLICABILITY

The electrode for water electrolysis disclosed herein can be used as an anode or a cathode for water electrolysis.

## Claims

1. An ink for water electrolysis electrode catalyst, comprising:

   a catalyst including at least one transition metal;
   a support including a transition metal and supporting the catalyst;
   an organic polymer; and
   a solvent including water, wherein
   the organic polymer comprises a water-insoluble polymer and a nonionic water-soluble polymer.

2. The ink according to claim 1, wherein
   a content of the nonionic water-soluble polymer in solids of the ink is 5 mass% or more.

3. The ink according to claim 1 or 2, wherein
   the nonionic water-soluble polymer is free of a hydrophobic group.

4. The ink according to any one of claims 1 to 3, wherein
   the nonionic water-soluble polymer comprises at least one selected from the group consisting of polyvinylpyrrolidone, polyvinyl alcohol, polyethylene oxide, polyacrylamide, and polyethylene glycol.

5. The ink according to any one of claims 1 to 4, wherein
   the transition metal included in the catalyst comprises at least one selected from the group consisting of V, Cr, Mn, Fe, Co, Ni, Cu, W, and Ru.

6. The ink according to claim 5, wherein
   the transition metal included in the catalyst comprises at least one selected from the group consisting of Fe and Ni.

7. The ink according to any one of claims 1 to 6, wherein
   the catalyst is a hydroxide of the transition metal.

8. The ink according to claim 7, wherein
   the hydroxide is a layered double hydroxide.

9. The ink according to any one of claims 1 to 8, wherein
   the water-insoluble polymer comprises a fluoropolymer.

10. The ink according to claim 9, wherein
    the fluoropolymer comprises a perfluoroalkyl sulfonic acid-based polymer.

11. An electrode catalyst comprising:

    a catalyst including at least one transition metal;
    a support including a transition metal and supporting the catalyst; and
    an organic polymer, wherein
    the organic polymer comprises a water-insoluble polymer and a nonionic water-soluble polymer.

12. A water electrolysis cell, comprising:

    an anode;
    a cathode; and
    an electrolyte membrane disposed between the anode and the cathode, wherein
    at least one of the anode and the cathode includes the electrode catalyst according to claim 11.

13. The water electrolysis cell according to claim 12, wherein
    the electrolyte membrane comprises an anion-exchange membrane.

14. The water electrolysis cell according to claim 12, wherein
    the electrolyte membrane comprises a cation-exchange membrane.

**15.** A water electrolysis cell, comprising:

a separator separating a first space and a second space;
an anode disposed in the first space; and
a cathode disposed in the second space, wherein
at least one of the anode and the cathode includes the electrode catalyst according to claim 11.

**16.** A water electrolysis apparatus, comprising:

the water electrolysis cell according to any one of claims 12 to 15; and
a voltage applying unit that applies a voltage between the anode and the cathode, the voltage applying unit being connected to the anode and the cathode.

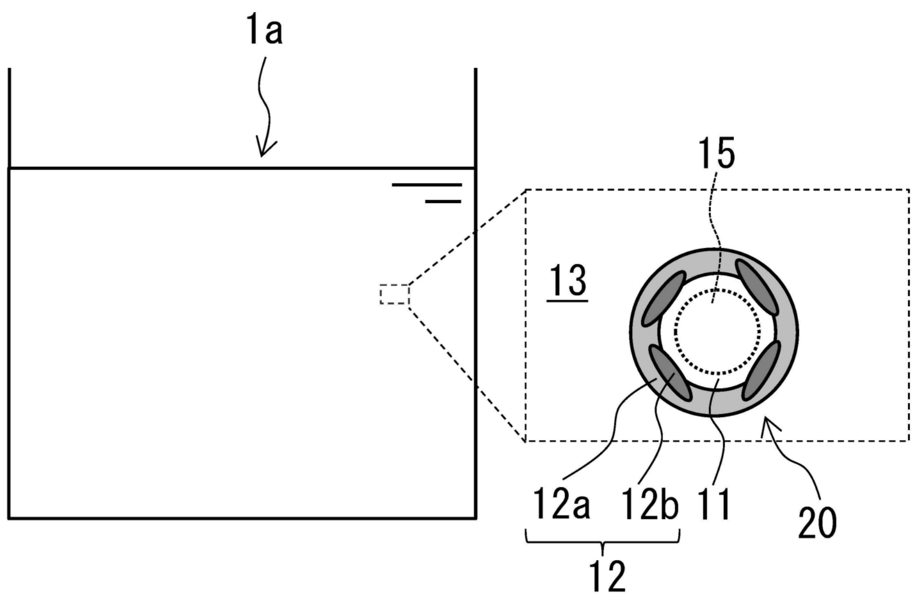


FIG. 1

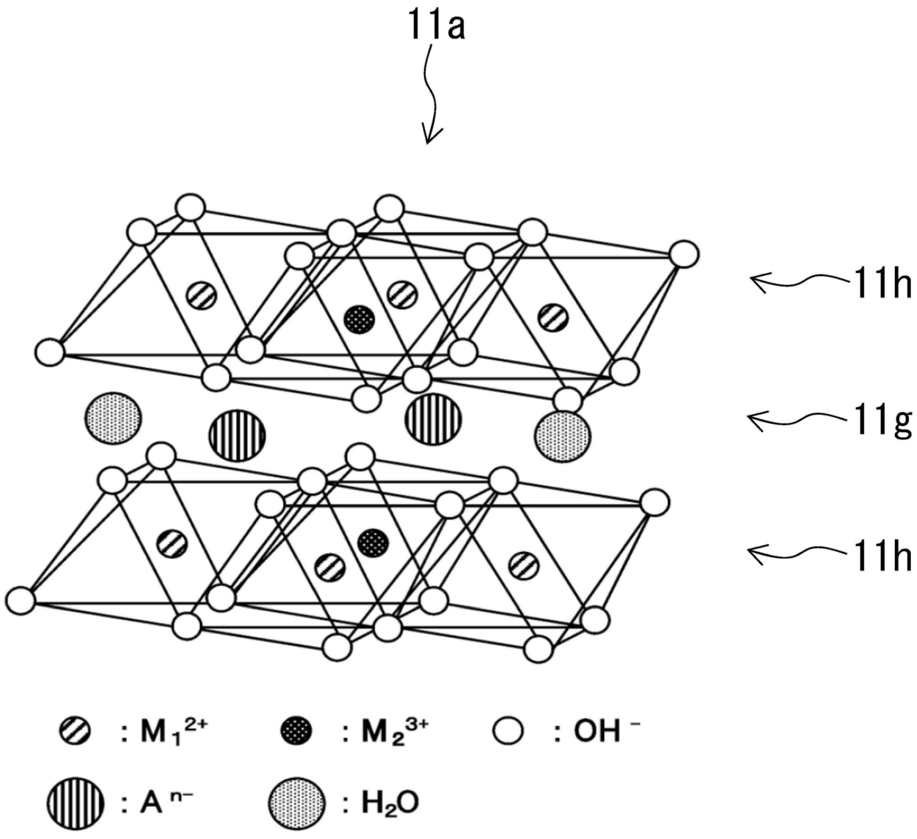


FIG. 2

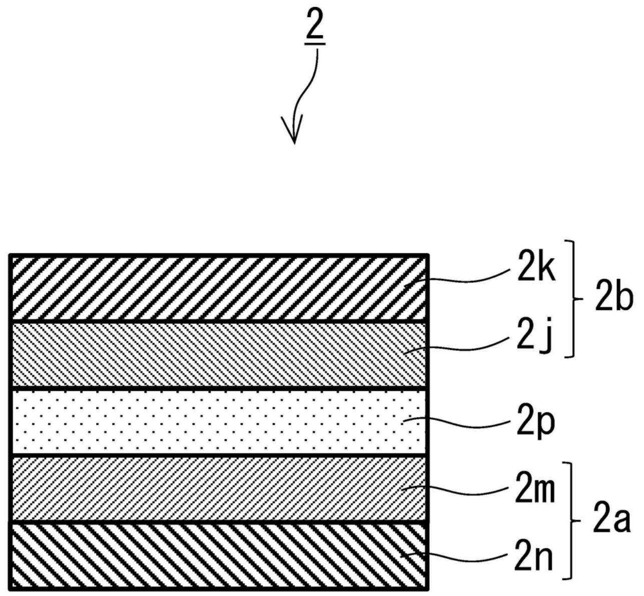


FIG. 3

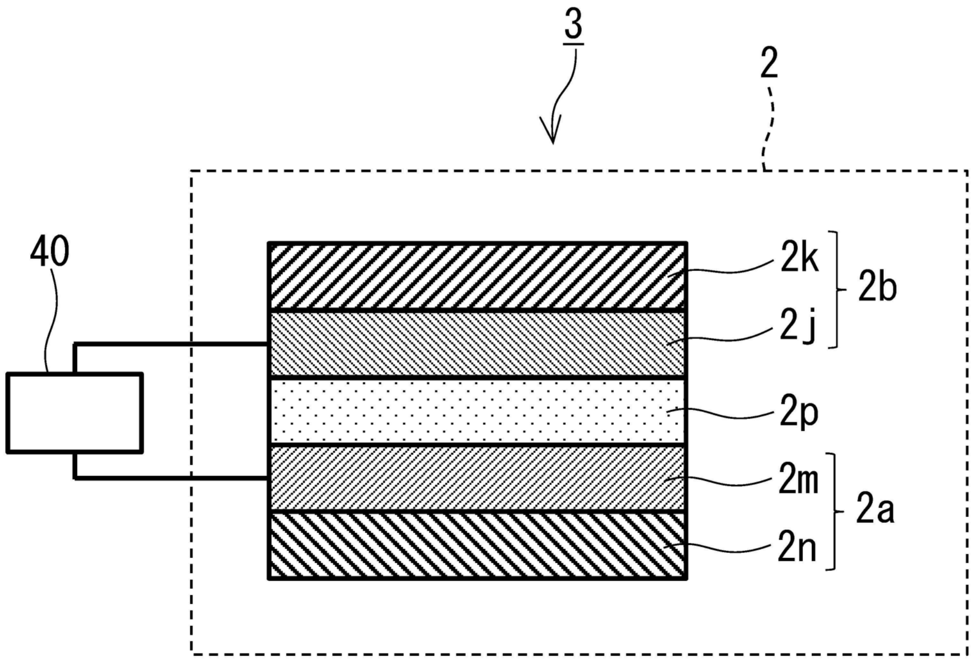


FIG. 4

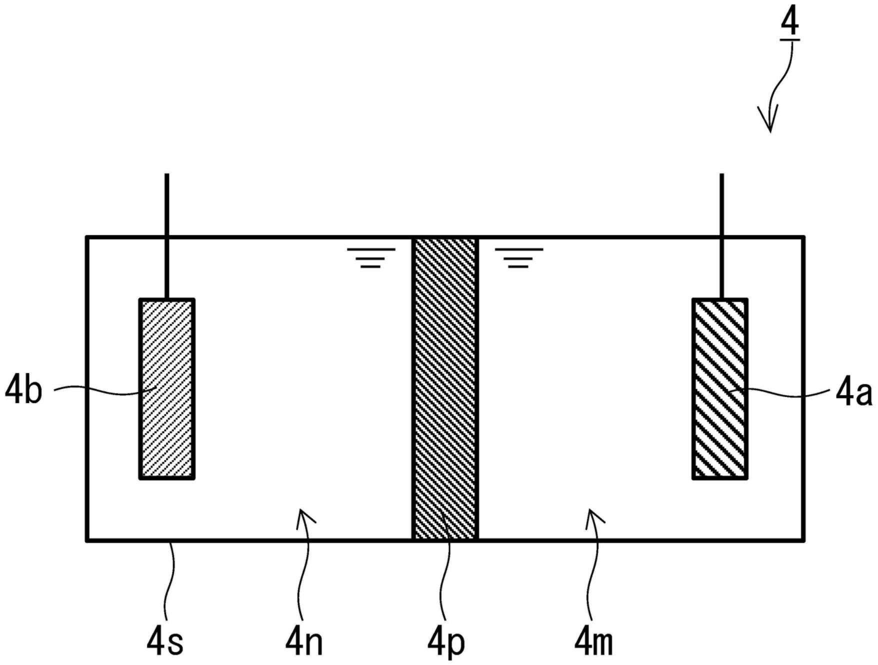


FIG. 5

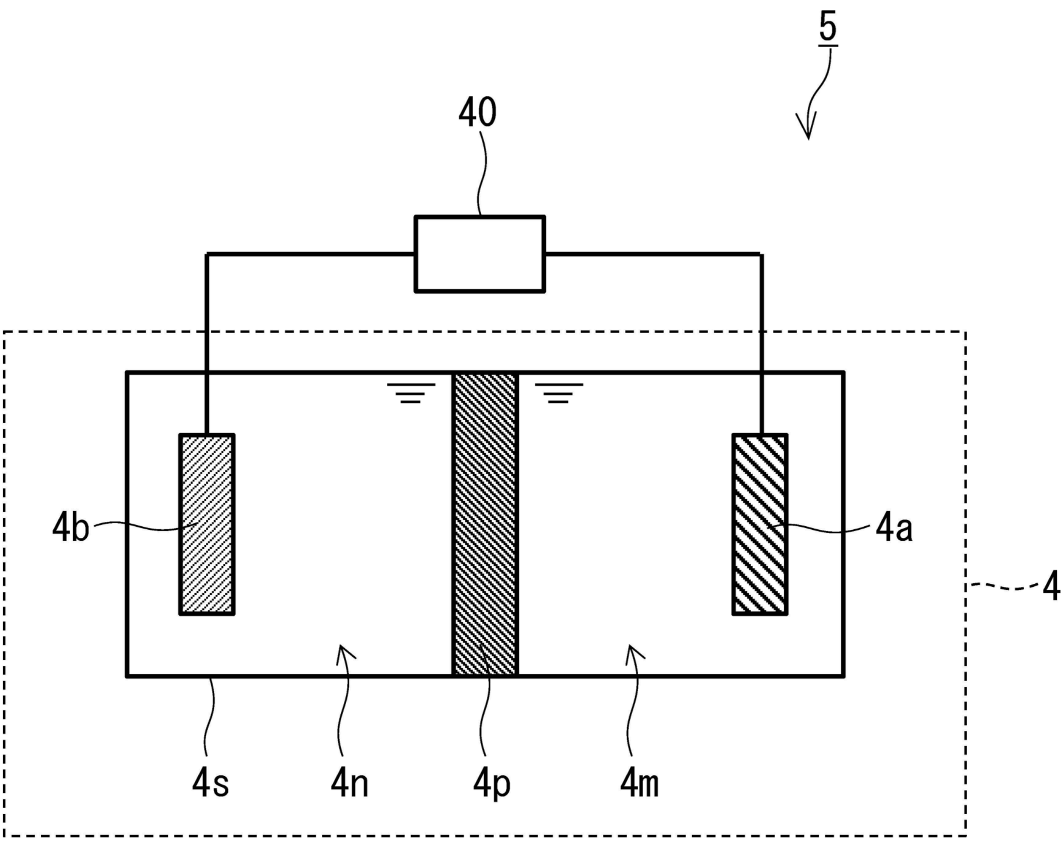


FIG. 6

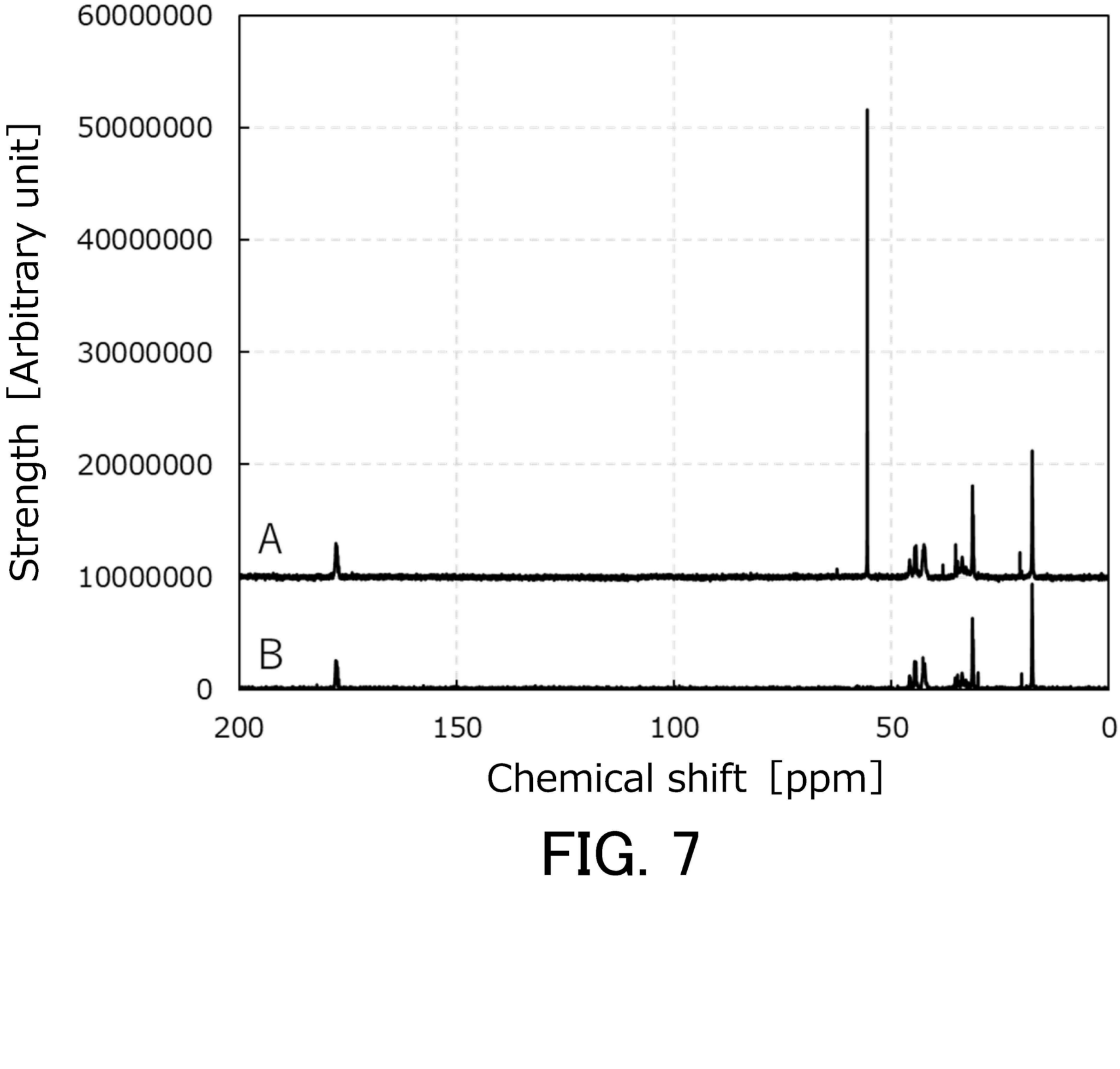
60000000
50000000
40000000
30000000
20000000
10000000
0
Strength [Arbitrary unit]
A
B
200
150
100
50
0
Chemical shift [ppm]

FIG. 7

**INTERNATIONAL SEARCH REPORT**

International application No.
**PCT/JP2024/016614**

**A. CLASSIFICATION OF SUBJECT MATTER**

***C25B 11/052***(2021.01)i; ***C25B 1/04***(2021.01)i; ***C25B 9/00***(2021.01)i; ***C25B 9/23***(2021.01)i; ***C25B 11/075***(2021.01)i
FI: C25B11/052; C25B1/04; C25B9/00 A; C25B9/23; C25B11/075

According to International Patent Classification (IPC) or to both national classification and IPC

**B. FIELDS SEARCHED**

Minimum documentation searched (classification system followed by classification symbols)

C25B11/00-11/097

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br><br>Y | CN 113517449 A (THE 718TH RESEARCH INSTITUTE OF CHINA SHIPBUILDING INDUSTRY CORPORATION) 19 October 2021 (2021-10-19)<br>claims, paragraphs [0002], [0008]-[0028], [0037]-[0044], fig. 1 | 1, 3-6, 9-12, 14-16<br><br><br>2, 7-8, 13 |
| Y | WO 2022/014242 A1 (PANASONIC INTELLECTUAL PROPERTY MANAGEMENT CO., LTD.) 20 January 2022 (2022-01-20)<br>claims, paragraphs [0033]-[0077], fig. 1-6 | 1-16 |
| Y | JP 2014-159027 A (BAYER MATERIALSCIENCE AG) 04 September 2014 (2014-09-04)<br>paragraph [0050] | 1-16 |
| Y | JP 54-10279 A (TOKUYAMA SODA K K) 25 January 1979 (1979-01-25)<br>page 2, upper right column, line 17 to lower left column, line 3 | 1-16 |
| Y | JP 2002-317289 A (ASAHI KASEI KABUSHIKI KAISHA) 31 October 2002 (2002-10-31)<br>paragraph [0025] | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 July 2024** | **16 July 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/016614**

**C. DOCUMENTS CONSIDERED TO BE RELEVANT**

| Category* | Citation of document, with indication, where appropriate, of the relevant passages | Relevant to claim No. |
|---|---|---|
| Y | WO 2022/071128 A1 (PANASONIC INTELLECTUAL PROPERTY MANAGEMENT CO., LTD.) 07 April 2022 (2022-04-07) claims | 7-8 |
| A | | 1-6, 9-16 |

Form PCT/ISA/210 (second sheet) (July 2022)

**INTERNATIONAL SEARCH REPORT**
**Information on patent family members**

International application No.
**PCT/JP2024/016614**

| Patent document cited in search report | Publication date (day/month/year) | Patent family member(s) | Publication date (day/month/year) |
|---|---|---|---|
| CN 113517449 A | 19 October 2021 | (Family: none) | |
| WO 2022/014242 A1 | 20 January 2022 | US 2023/0143685 A1<br>claims, paragraphs [0049]-[0092], fig. 1-6<br>EP 4183901 A1<br>CN 116133746 A | |
| JP 2014-159027 A | 04 September 2014 | US 2014/0224667 A1<br>paragraph [0052]<br>US 2017/0067172 A1<br>EP 2765222 A1<br>DE 102013202143 A1<br>CN 103981536 A | |
| JP 54-10279 A | 25 January 1979 | US 4190516 A<br>column 1, lines 52-60<br>GB 1603472 A<br>DE 2811472 A1<br>FR 2384036 A1 | |
| JP 2002-317289 A | 31 October 2002 | (Family: none) | |
| WO 2022/071128 A1 | 07 April 2022 | US 2023/0235467 A1<br>claims<br>EP 4223417 A1<br>CN 116194213 A | |

Form PCT/ISA/210 (patent family annex) (July 2022)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- JP 2017210637 A